# EUROPEAN PATENT APPLICATION

(11) **EP 1 038 656 A1**
(43) Date of publication of application: **27.09.2000**
(21) Application number: 99104145.0
(22) Date of filing: 02.03.1999
(51) Int. Cl.: B29C 70/00

(54) **Vacuum resin impregnation process**

(71) Applicant: LS Technologies, Inc. A Pennsylvania Corporation, Philadelphia, PA 19147 (US)
(72) Inventor: Smith, Novis W., Philadelphia, PA 19147 (US); Livesay, Mark, El Cajon, California 92020 (US)
(74) Representative: Bauer, Wulf, Dr.

(57) **Abstract**

The present invention places a fibrous reinforcing substrate (14) on a tool, mold or film layer and exposes it to a dual chambered system to vacuum impregnate the reinforcing substrate (14) uniformly across the width and length thereof. A lower chamber (16) is formed around the fibrous reinforcing substrate (14) and the tool, mold or film layer. An upper chamber (18) is formed above the lower chamber, the upper chamber (18) containing means therein for forming a reversible patterned or contoured pathway (32), such as a patterned or contoured sheet layer, over the reinforcing substrate. An impervious sheet (15) separates the lower and upper chambers (16,18). When a vacuum is drawn through the system it forms temporary resin pathways between the reinforcing substrate (14) and the impervious sheet (15).

## Description

### BACKGROUND OF THE INVENTION

### Field Of The Invention

The present invention relates to a process and apparatus for manufacturing resin impregnated fiber composites and more particularly to manufacturing the composites via use of a vacuum and differential pressure in a dual chambered system.

### Description Of The Prior Art

Fiber reinforced composite parts are fabricated utilizing a variety of conventional techniques including resin transfer molding ("RTM"), prepreg procedures, and preforming operations. Fiber reinforced plastic structures have been commercially produced for some years. The current state of the art for resin impregnation is summarized in the following two journal articles: *Resin flow control is the key to RTM success* by Fisher, Karen in High-Performance Composites, pp. 34-38 (Jan/Feb 1997); and *Resin Infusion under Flexible Tooling (RIFT): a review* by Williams, Christopher; Summerscales, John; and Grove, Stephen in Composites Part 27A, pp. 517-524 (1996); both of which are hereby incorporated by reference.

The processes for producing these structures require the incorporation of a resin or other flowable plastic material into a reinforcing fiber, generally in the form of one or more layers of a woven or felted fiberglass. This is usually done by either a wet or dry fiber lay up technique. In accordance with the wet fiber process, the resin "wetted" fiber reinforcement consists of a prepreg which already contains the resin and is laid up on a mold. In the dry fiber process, the fiber reinforcement is laid up dry on a mold or form which serves as a mold. The form may be incorporated as part and parcel of the finished product. Thereafter, the fiber is sprayed, brushed, impregnated or otherwise coated or "wetted" with the resin. The resin is then cured to form the fiber reinforced plastic structure.

Vacuum assisted or vacuum bag techniques have been used in the past to form fiber resin structures or composites. In a vacuum bag technique, a flexible sheet, liner, or bag is used to cover a single cavity mold which contains the dry or wet (resin impregnated) fiber lay up. In accordance with the wet fiber process, the edges of the flexible sheet are clamped against the mold to form an envelope and seal the resin impregnated fiber lay up to the mold. A vacuum is then applied to consolidate and part cure the resin. In the dry fiber lay up, catalyzed liquid plastic or resin is generally introduced into the envelope or bag interior to wet the dry fiber, usually using a vacuum to help pull the resin into the bag and wetting out the dry fiber. The vacuum is applied to the bag interior via a vacuum line to collapse the flexible sheet against the fiber and surface of the mold, while the plastic wetted fiber is pressed, compacted and cured to form the fiber reinforced plastic structure. Resin fumes from the process are prevented from escaping into the ambient work space by the closed system.

British Patent No. 944,955 to Green describes a vacuum bag technique for the production of a fiber reinforced resin structure. In accordance therewith, a plurality of layers of a dry glass fabric or cloth are laid upon a single cavity mold. The mold is then covered by a flexible sheet or bag and the outer edges of the sheet are sealed upon the mold to leave an internal mold space in which the dry lay up is contained. A liquid resin is introduced via a supply line located at the top center of the bag to the bag interior or mold space to cover the dry lay up and a vacuum is drawn upon the bag via a vacuum line located at a peripheral edge of the mold. The bag is collapsed against the mold to press and force the fiber to follow its contour and heat may be applied to help cure the resin.

In U.S. Patent No. 4,312,829 to Fourcher, which is hereby incorporated by reference, there is also described a first (lower) mold section and a second (upper) flexible mold section. The edges of the flexible mold section are sealed and supported upon the rigid mold section to leave a single internal chamber. The upper side of the flexible mold section is provided with an inlet through which a resin can be introduced to the chamber and a vacuum outlet for pulling a vacuum upon the chamber. A perforated core material is placed within the chamber to which the resin is introduced and on which the resin is set for formation of a resin-core structure. A matting can be placed atop the core to prevent escape of the resin into the vacuum outlet. After the plastic has set, the flexible or upper mold is removed.

U.S. Patent No. 2,913,036 to Smith, which is hereby incorporated by reference, describes a vacuum bag method wherein a rigid network of veins or arteries are extended upwardly from the base of the mold. The purpose of the veins or arteries is to flow the plastic or resin upwardly through the mold surface to apply at a multiplicity of points a fluid plastic or resin, which may then seep from the points to every part of the mold space. The veins or arteries are elongated, generally rigid members coated with a permeable material or embedded between layers of the fabric reinforcing material to become an integral part of the final casting appearing therein as reinforcing ribs.

U.S. Patent No. 4,132,755 Johnson, which is hereby incorporated by reference, discloses a "bag within a bag" vacuum bag technique for obtaining better and more uniform distribution of the resin. In accordance therewith, a perforated flexible sheet is placed over the dry fiber lay up. Within the inner chamber is a single cavity mold. The inner chamber is connected to a vacuum source. An impervious flexible sheet is placed on the perforated flexible sheet to provide an outer chamber between the two sheets. The outer chamber is then connected to a resin source and the edges of both sheets are sealed upon the mold surface. This method provides better distribution of the resin throughout the mold space than with that of Smith because the resin does not flow longitudinally through the glass fibers which would give a 'washing' effect. Rather, this method orients these fibers such that they are evenly distributed through the many pinhole-like apertures in the perforated sheet. In this manner each drop of resin reaches every corner of the laminate without flowing lengthwise through the glass reinforcement.

Despite the many advances in vacuum bag resin impregnation techniques, there remains a pressing need for a process or apparatus, or both, for adequately and uniformly distributing resin to a fiber lay up as rapidly as possible as is required in applications for constructing various types of fiber reinforced resin structures. This is particularly critical for high viscosity resins and those resins which cure very rapidly. There also is a pressing need for a process and apparatus of this type which will require minimum use of operating labor.

Accordingly, it is the primary objective of the invention to meet these and other needs and to provide a process which is superior to that known in the art.

A particular object is to provide an improved apparatus for the production of high strength fiber reinforced resin or plastic structures having improved mechanical properties, particularly fiber reinforced resin or plastic structures having high reinforcement-to-resin ratios.

A further object is to provide a process for rapid resin impregnation of a fiber reinforcement so as to result in a cured composite having high fiber content and being fully wetted out.

Yet another object is the provision of an efficient process for fabrication of a resin-fiber composite by uniformly and rapidly impregnating a fiber reinforcement material with resins of differing viscosities under practical conditions, and improving the mechanical properties thereof.

A further object is to provide an apparatus for the production of resin fiber reinforced composite structures of a variety of sizes and shapes wherein the fluid plastic or resin is more uniformly, consistently and continuously applied to and distributed throughout the fiber reinforcing material with minimal use of operating labor.

A further, and more specific object, is to provide an apparatus for more uniformly, consistently and continuously applying the fluid plastic or resin to one or more layers of woven or felted reinforcing materials, particularly woven or felted fiberglass, to form fiberglass reinforced laminates of strength favorably comparable to laminates of substantially similar compositions formed by prepreg-autoclave techniques.

Yet another object is to provide an apparatus for forming high strength fiber reinforced resin or plastic sandwich structures.

It is yet another object to disclose a uniform vacuum bag structure which can be readily manufactured for a particular article and mold and which integrates the features of resin distribution and vacuum draw off with the sealing and pressing features of a standard vacuum bag.

It is a further object to disclose a vacuum bag which is formed to provide the most uniform possible pressure structure for the manufacture of a fiber reinforced composite structure against a mold.

Yet another object is to disclose a vacuum bag which assures uniform resin distribution throughout the fiber lay up for a vacuum bag molded fiber reinforced composite structure.

It is yet a further object to disclose a vacuum bag which may be rapidly reused for the rapid production of a series of identical fiber reinforced composite structures on a mold.

These and other objects and advantages of this invention will become more apparent hereinafter.

### Summary Of The Invention

The present invention teaches an improved process and apparatus for resin impregnation via use of a vacuum. More particularly, the invention utilizes a dual chambered system to vacuum impregnate a fibrous reinforcing substrate with a resin on a tool, mold or film layer. The fibrous reinforcing substrate and the tool, mold or film layer form a part of a lower chamber which contains the reinforcing substrate therein. An upper chamber having means therein for forming a reversible patterned or contoured pathway over the reinforcing substrate is provided. The lower and upper chambers are separated by a semiflexible impervious sheet and form the dual chambered system. A vacuum is drawn through the system for forming temporary resin pathways between the reinforcing substrate and the impervious sheet and for applying a differential pressure between the lower and upper chambers. A flow of resin is then provided to and through the pathways which results in the fibrous reinforcing substrate being impregnated with the resin to form an impregnated resin-fiber composite. The vacuum is advantageously drawn separately through each chamber. The differential pressure that is applied creates a greater vacuum and a lower pressure in the upper chamber in comparison to a vacuum and a pressure in the lower chamber.

It has been found to be advantageous to have a higher pressure in the lower chamber where the reinforcing substrate is contained than in the upper chamber. Furthermore, it has been found preferable to use a patterned or contoured sheet layer to provide the patterned pathway means. In certain applications, it may be preferable to add the step of curing the impregnated resin-fiber composite after impregnation.

In a vacuum bag system having dual upper and lower chambers separated by an impervious sheet, the patterned or contoured sheet layer is advantageously located within the upper chamber. In such a system, a vacuum is separately drawn through both lower and upper chambers to provide a pressure differential between the two chambers such that a first seal film is deformed away from an assembly composite and against the patterned or contoured sheet layer to form interconnecting channels. These channels provide temporary resin pathways above the assembly composite and between the reinforcing substrate and the impervious sheet. Advantageously, the pressure differential that is applied results in a higher pressure in the lower chamber where the reinforcing substrate is contained.

The resin is then introduced into and through the pathways along and above the full width and length of the fiber reinforcement substrate. The resin flows through the defined path until the fiber reinforcement substrate is sufficiently wetted. Advantageously, the vacuum pressure differential is reversed between the two chambers for additional impregnation and compaction of the fiber reinforcing substrate with the resin. The reversal in vacuum increases the pressure in the upper chamber where the patterned or contoured sheet is contained. Preferably, the vacuum in the upper chamber can be released to atmospheric pressure, which results in the collapsing of the temporary resin pathways and the flattening of the patterned or contoured pathway means against the reinforcing substrate. Optionally, the resin-fiber composite is cured thereafter. The process taught herein impregnates and compacts the substrate faster and better than any other known RTM process.

The present invention also teaches an apparatus to practice the process taught by the invention. The resulting product contains better and more uniform distribution of the resin throughout the fiber reinforced composite parts.

The present invention will be more clearly understood by referring to the following description and claims taken in conjunction with the accompanying drawings.

### Brief Description of the Drawing

**Figure 1** is a schematic sketch of the apparatus before the application of a differential pressure.

**Figure 2** is a schematic sketch of the apparatus after the application of a differential pressure.

**Figure 3** is a schematic sketch of the apparatus at the conclusion of the process.

### Description of the Preferred Embodiments

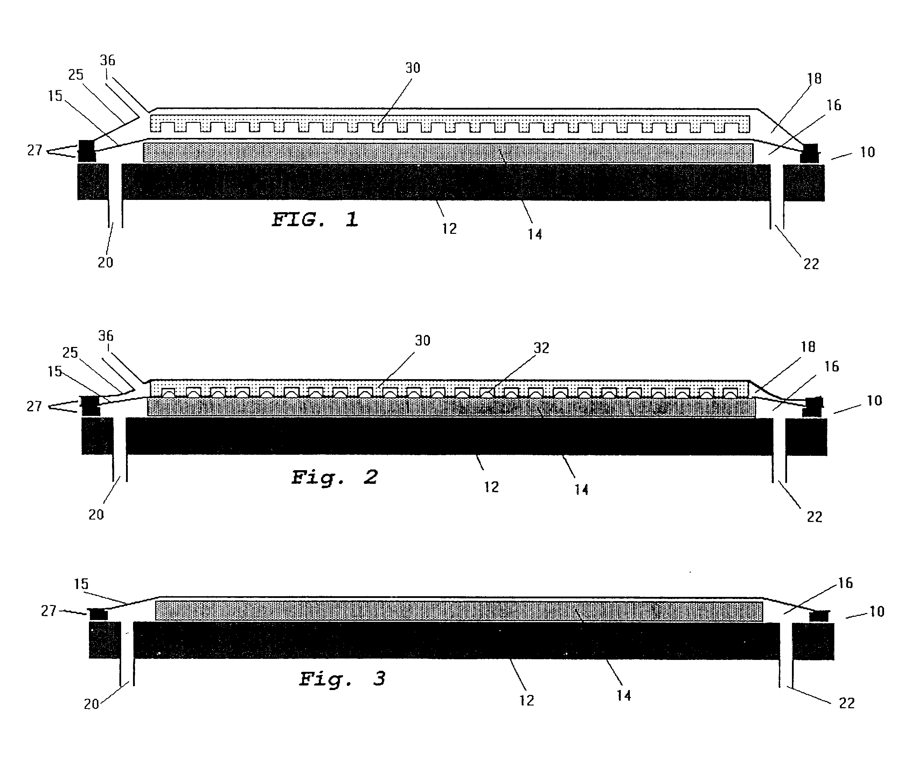

Referring now to **Figure 1**, it can be seen that a preferred embodiment of the apparatus **10** taught by the present invention includes a tool, mold or film layer **12** on which a fibrous reinforcing substrate **14** is placed to form a part of a lower chamber **16**. At least one upper chamber **18,** having means therein for forming a reversible patterned or contoured pathway **30** over the reinforcing substrate **14,** is provided. A semiflexible impervious sheet layer **15** contiguous with the lower chamber **16** and separating the two chambers **16** and **18** is also provided. The lower **16** and upper **18** chambers and the impervious sheet **15** and **25** form a dual chambered system. The upper chamber **18** may or may not entirely cover the lower chamber **16.** Vacuum ports **20** and **36** and resin port **22** are attached to the apparatus **10** to facilitate the introduction and expulsion of pressure and resin, respectively. The chambers are sealed at their perimeters by seal **27** which may be a mastic adhesive or reusable permanent type seals.

The vacuum ports **20** and **36** include vacuum inlet port **20** for the lower vacuum chamber **16** and vacuum outlet port **36** for the upper vacuum chamber **18.** The resin port **22** includes one or more inlet ports which are only hooked up to the lower vacuum chamber **16.** In addition to the very rapid impregnation of the reinforcing substrate, one of the great benefits of the present invention is the ease of clean-up of the apparatus and therefore, the ability to quickly make reproducible resin-fiber composites. Since the resin only enters the lower chamber **16** and never enters the upper chamber **18,** the apparatus **10** will contain less contaminants and the system can be quickly cleaned for another production run, which results in a more uniformly consistent product. In addition, very fast curing resins, very viscous resins, and plastic materials can be readily impregnated in the reinforcement material. Previous related processes are much slower than this process.

The apparatus **10** further includes means for drawing a vacuum through the system for forming temporary reversible resin pathways **32**, as seen in **Figure 2,** between the reinforcing substrate **14** and the impervious sheet **15**. Means for providing a flow of resin to the resin pathways **32** is additionally provided. Finally, means for applying a differential pressure between the lower **16** and upper **18** chambers is also provided.

Now that the main elements of the apparatus **10** have delineated, it can be appreciated how the invention operates. **Figure 1** shows the apparatus **10** before a vacuum is applied. The reversible patterned or contoured pathway means **30** for forming the temporary resin pathways **32**, as seen in **Figure 2,** preferably consists of patterned or contoured sheet layers or individual resin flow channel formers **30.** Furthermore, the sheet layers **30** advantageously include means for applying heat to the resin-fiber composite. The sheet layer **30** preferably comprises a cloth or plastic. Bubblewrap may be advantageously used as the patterned or contoured sheet **30**. The patterned or contoured sheet layer **30** is preferably impervious and forms the upper chamber **18** which is sealed to the lower chamber **16.**

**Figure 2** shows the apparatus **10** after a vacuum is drawn through the system to apply a differential pressure. It can be seen that the sheet layer **15** has been deformed away from the lower chamber **16** such as to form temporary resin pathways **32** between the reinforcing substrate **14** and the impervious sheet **15.** Preferably, the impervious sheet **15** is pressed against the patterned or contoured layer **30** to form the interconnecting temporary resin pathway channels **32** between the reinforcing substrate **14** and the sheet layer **15.** Next, a flow of resin is introduced through the resin port **22** and into the resin pathways **32**.

Once the resin has sufficiently wetted out the reinforcing substrate **14,** the vacuum in the upper chamber **18** is released, preferably, until the upper chamber **18** reaches atmospheric pressure. This step is illustrated in **Figure 3**. The change in differential pressure causes the sheet layer **15** to collapse against the reinforcement layering **14** on the tool, mold or film **12** and eliminates the temporary resin pathways **32,** which facilitates the impregnation, compaction and curing of the fibrous reinforcing substrate **14** with the resin to form an impregnated resin-fiber composite.

Preferably, the resin is a thermoplastic or thermoset resin. Furthermore, the resin may advantageously include a catalyst. In the cases where the resin contains a catalyst and cures at room temperature, the reinforcing substrate **14** is permitted to cure in place. Heat may also advantageously be added to speed up the curing process. In a liquid cure system, the reinforcing substrate **14** is liquid cured through the sheet layer **15**.

According to the present invention, the positive pressure differential, which is applied to the system for pressing and flattening the sheet layer **15** against the contoured or patterned sheet **30** to form the temporary resin pathways **32** prior to resin impregnation, can be accomplished via vacuum, gas or liquid pressure. The pressure in the reinforcement layer **14** preferably ranges from about 28 inches mercury to about 150 psi, and most preferably, from about 28 inches mercury to 20 psi. The pressure in the chamber with the contoured or patterned sheet **30** (e.g. upper chamber **18**) is advantageously made lower than in the chamber with the fiber reinforcement substrates **14** to be impregnated (e.g., lower chamber **16**). A pressure differential must be maintained to keep the sheet layer 15 separating the two chambers **16** and **18** pressed against the patterned or contoured sheet **30**, thus forming the temporary resin pathway channels **32.** Advantageously, positive pressure on the chamber containing the composite (e.g., lower chamber **16**) is applied during compaction and curing of the resin following the fiber reinforcement impregnation for enhancement of the properties of the resulting resin-fiber composite. Preferably, this positive pressure is readily achieved by opening up the chamber containing the patterned or contoured sheet **30** (e.g., upper chamber **18**) to atmospheric pressure while keeping the chamber containing the resin impregnated fiber reinforcement layer (e.g., lower chamber **16**) below atmospheric pressure, such as with the use of a vacuum.

The lower and upper chambers **16** and **18** are separated by a semiflexible impervious sheet **15** to form the dual chambered system. A vacuum is drawn through the upper chamber **18** of the system such as to form temporary resin pathways **32** between the reinforcing substrate **14** in the lower chamber **16** and the sheet layer **15** which has been drawn or pressed against the patterned or contoured surface **30** of the upper chamber **18.** A flow of resin is then provided to the temporarily formed pathways **32.** Vacuum is applied separately to the lower chamber **16,** which will facilitate the flow of resin over the top of and down through the reinforcing substrate **14**. The vacuum in the lower chamber **16** is somewhat less than that in the upper chamber **18** and the absolute pressure is correspondingly higher in the lower chamber **16.** It is necessary to maintain a pressure differential between the two chambers **16** and **18** for the formation of the temporary resin pathways **32,** which facilitates resin flow.

The applied pressure between the lower and upper chambers **16** and **18** results in the fibrous reinforcing substrate **14** being impregnated. When sufficient resin has been introduced to wet out the composite part, the vacuum is released in the upper chamber **18,** preferably to atmospheric pressure. This collapses the temporary resin pathways **32** and flattens the patterned or contoured sheet layer **30** against the reinforcing substrate **14**, which compresses and compacts the resin-fiber reinforced composite. The patterned or contoured sheet **30** can be removed at this point and the composite can be cured, if desired.

The apparatus **10** and process taught by the present invention for making the impregnated resin-fiber composite results in a composite having a better and more uniform distribution of resin, especially with viscous or rapid curing resins. A high strength fiber reinforced resin or plastic structure having superior mechanical properties, for example, having high reinforcement-to-resin rations, can be made easier and better than heretobefore with the present invention. This process is far faster and larger composites can be made than previously done.

Moreover, since the fluid plastic or resin is more uniformly, consistently and continuously applied to and distributed throughout the fiber reinforcing substrate **14,** a variety of sizes and shapes of resin-fiber composites can be more easily prepared. The apparatus **10** and process taught herein is quicker, more reproducible and easier to operate than that currently being used today. There are less accompanying waste materials formed in this process than in known comparable processes.

Furthermore, the invention is very useful for applying the fluid plastic or resin to one or more layers of woven or felted reinforcing materials, particularly woven or felted fiberglass, to form fiberglass reinforced laminates. These laminates have strengths that are as good as or better than the strengths of substantially similar compositions prepared by prepreg-autoclave techniques.

The apparatus **10** taught herein can be used to form high strength fiber reinforced plastic sandwich structures. Advantageously, the vacuum bag system used to form the dual chambers is uniform and can be readily manufactured for a particular article and mold. The apparatus **10** may be rapidly reused for the rapid production of a series of identical resin-fiber composites with a minimum use of operating labor.

Advantageously, the differential pressure between the chambers **16** and **18** results from an introduction or release of gasses or liquids into or from one of the chambers **16** and **18**, respectively. Most advantageously, the pressure in the lower chamber **16** is more than the pressure in the upper chamber **18**. There are four major ways of accomplishing this goal. First and second, you can release the vacuum from the lower chamber **16** or apply a vacuum to the upper chamber **18**. Third and fourth, you could introduce a liquid into the lower chamber **16** or release a liquid from the upper chamber **18.**

The resulting impregnated resin-fiber composite may be an uncured or partly cured prepreg. Even though the applied differential pressure facilitates curing of the resin-fiber composite, it may be necessary in certain applications to provide additional curing. Therefore, once the process is completed, it may be advantageous to continue curing the impregnated resin-fiber composite. This additional curing may be accomplished by applying ambient air to the composite, heating the composite or exposing the composite to UV or IR light.

Additional impregnation and compaction of the reinforcing substrate **14** can be advantageously accomplished by tilting up the apparatus **10** to a substantially inclined position such that gravity will assist in the movement of the resin to form the resulting composite. Most preferably, the apparatus **10** is tilted up to a vertical position to maximize the gravity forces.

It would also be advantageous to include a lower seal film **15** to cover the lower chamber **16.** Similarly, it would be advantageous to include an upper impervious flexible or rigid seal film **25** to cover the upper chamber **18**. Most advantageously, the apparatus **10** would include both lower and upper seal films **15** and **25,** respectively, to cover the lower and upper vacuum chambers **16** and **18**, respectively. One preferred embodiment of the apparatus would include a common impervious flexible boundary sheet between the lower and upper chambers **16** and **18.**

Various modifications to the system are contemplated by the present invention. After the reinforcing substrate **14** is placed on a surface of a tool, mold or film layer **12**, it has been found advantageous to take a lower impermeable seal film **15** and apply and seal it over the reinforcing substrate **14** to form the lower chamber **16** as shown in **Figure 3.** Then, the reversible patterned or contoured sheet layer **30** is placed over the lower seal film **15.** The lower seal film **15** is preferably a flexible film. The patterned or contoured sheet layer **30** is preferably semi-rigid. Similarly, it has also been found advantageous to apply and seal an upper impermeable seal film **25** over the patterned or contoured sheet layer **30** to form the upper chamber **18.** The upper seal film **25** is also preferably a flexible film. Moreover, the lower and/or upper seal films **15** and **25,** respectively, include an embossed or contoured sheet. Most preferably, the upper seal film **25** includes a contoured elastomeric sheet having a resin distribution pattern molded therein.

As before, means for introducing the resin into the lower chamber **16** and through the assembly and means for drawing a vacuum separately through each chamber **16** and **18** are provided. When the vacuum is drawn through each chamber **16** and **18,** it provides a pressure differential between the chambers **16** and **18**. This causes the lower seal film **15** to deform away from the reinforcing substrate **14** and against the patterned or contoured sheet layer **30.** This will form temporary interconnecting channels which produce resin pathways **32** between the reinforcing substrate **14** and the lower seal film **15.** The vacuum in the upper chamber **18** is greater than the vacuum in the lower chamber **16.** Likewise, the pressure in the upper chamber **18** is less than the pressure in the lower chamber **16.**

The resin is then introduced into the lower chamber **16** and through the temporary resin pathways **32.** The resin flows through the resin pathways defined by the upper seal film **25** and the patterned or contoured sheet layer **30** until the reinforcing substrate **14** is sufficiently wetted and impregnated with the resin. Finally, as described before, it has been found advantageous to apply means for releasing the vacuum in the upper chamber **18,** preferably to atmospheric pressure, or to increase the pressure in the upper chamber **18 ,** which causes the resin pathways **32** to collapse and flattens the patterned or contoured sheet layer **30** against the reinforcing substrate **14** for compaction of the reinforcing substrate **14** with the resin. The resulting product is the impregnated resin-fiber composite. It has also been found advantageous to add the steps of removing the upper seal film **25** and then removing the patterned or contoured sheet layer **30.** Then, the resin-fiber composite is photocured for an effective period of time.

While the present invention describes a dual chambered system, it is contemplated that additional chambers may be advantageously added to system, especially in regard to the upper chambers. The means for introducing the resin preferably includes providing a source of liquid resin and at least one resin port inlet line **22** to the assembly and communication between the resin source, the resin port inlet line **22** and the lower chamber **16**. The means for drawing the vacuum preferably includes providing a source of vacuum and at least one vacuum port inlet line **20** and **40** to the assembly and separate communication between the vacuum source, the vacuum port inlet line **20** and **40** and the lower and upper chambers **16** and **18,** respectively. Further provided is at least one vacuum port outlet line **36** and **50** to the assembly and separate means for controlling the vacuum and pressure in each chamber.

The reinforcing substrate **14** may comprise either a fibrous or non-fibrous material depending on the requirements of the project. Typical fibrous materials such as carbon and glass cloth, carbon fibers, glass fibers and organic fibers are preferred. Typical preferred non-fibrous materials include rock, sand and mica. While the reinforcing substrate **14** is usually free of any resin prior to the impregnation process, it has been found advantageous in certain situations to have a reinforcing substrate **14** which contains some of the resin to be impregnated or some other type of resin prior to the sealing of the seal films.

The present invention also contemplates an impregnated resin-fiber prepreg which is formed from the process taught hereinabove.

Following are examples of using the process to make a resin-composite:

### Example I

A dry laminate or prepreg is placed on a mold and a vacuum bag is placed over the laminate and sealed. Contoured sheets or standoffs are placed on a lower bag covering the entire laminate area for facilitating resin flow. A top layer or film is sealed to the lower bag encapsulating the contoured sheets or standoffs and forms an upper bag. A vacuum port is attached to the upper bag and the bottom bag.

The lower bag and laminate are evacuated with vacuum up to a maximum of 29.4 inches of mercury. The upper bag is then evacuated to a minimum of 0.1 inches of mercury more than the lower bag. This differential vacuum deforms the bottom film away from the laminate, creating temporary resin flow channels between the laminate and the flexible film separating the two chambers for readying the system for resin infusion of the laminate. The resin flow line is opened and resin allowed to enter the laminate cavity through the formed channels. When a sufficient amount of resin has entered the space, the resin valve is closed. When the resin has wet out the fiber, the vacuum is released from the upper bag. The resulting pressure differential flattens the lower bag against the laminate. The upper bag and contoured sheets or standoffs can be removed, if desired. The part is then cured in a normal manner such as by air, heat, time, UV, IR or E-Beam. Optionally, the upper bag can be pressurized with air or liquid for further compaction, if the bag is clamped.

### Example 2

A dry laminate or prepreg is placed on a mold and a textured vacuum bag, similar to a Quick-Draw® film, is placed over the laminate and sealed. Vacuum ports and resin inlets are placed in the bag and/or mold periphery. Contoured sheets or standoffs are placed on the bag as is required for resin flow. These contoured sheets or standoffs do not have to cover the entire lower laminate, but rather only the areas where the primary temporary resin pathways are required. The Quick-Draw® film will carry the resin away from the temporary resin channels and across the laminate surface. A vacuum bag is sealed on the top of the lower bag over those areas where the contoured sheets or standoffs are placed to form a second chamber encapsulating the contoured sheets or standoffs. The vacuum ports are located in the top and bottom bags. Then, similar to Example 1, a differential pressure is applied to create the temporary resin flow channels. Optionally, these channels can be used to individually seal the upper, lower bags in sections if they are made of vacuum tight materials. This would allow for individual collapsing of these channels after the resin has wetted out the desired area surrounding the channels.

The upper bag(s) channels are evacuated with a vacuum to a maximum of 29.9 inches of mercury. The lower bag is then evacuated to about 0.1 inches of mercury or less than the channel forming upper bag. The resulting differential pressure deforms the bottom film away from the laminate and creates temporary resin flow channels above the laminate for readying the system for resin infusion of the laminate. The resin inlet flow line is opened and resin is allowed to enter the laminate cavity through the formed channels. When a sufficient amount of resin has entered the space, the resin valve is closed. When the resin has wetted out the fiber, the vacuum is released from the upper resin channel forming upper bag. The upper bag and standoffs can be removed if desired. The part is then cured in a normal manner, such as by heat, room temp, UV, IR or E-Beam.

The resin channel forming contoured sheets or standoffs can be textured, flexible materials such as a grooved rubber or individual channel forming materials, for example, flexible tubing cut in half longitudinally and placed with the cut side against the lower bag or bubble pack. Special channel containing sheets can be manufactured to act as arteries and veins.

Although the invention has been described with a certain degree of particularity, it is understood that the present disclosure has been made only by way of example and that numerous changes in details of construction and the combination and arrangement of parts may be resorted to without departing from the spirit and scope of the invention.

## Claims

1. A process for vacuum impregnating a fibrous reinforcing substrate with a resin on a tool, mold or film layer which forms a part of a lower chamber containing said reinforcing substrate, characterized by the steps of:
a) providing at least one upper chamber having means therein for forming a reversible patterned or contoured pathway over said reinforcing substrate, said lower and upper chambers being separated by a flexible impervious sheet and forming a dual chambered system;
b) drawing a vacuum through said upper chamber and separately through said lower chamber for applying a differential pressure between said lower and upper chambers such as to create a lower pressure in said upper chamber when compared to a pressure in said lower chamber and for forming temporary resin pathways between said reinforcing substrate and said impervious sheet;
c) providing a flow of resin to and through said pathways;
and
d) impregnating said reinforcing substrate with said resin to produce an impregnated resin-fiber composite.

2. The process according to claim 1, characterized by releasing said vacuum in said upper chamber such as to collapse said resin pathway and flatten said patterned or contoured pathway means against said reinforcing substrate for compaction of said reinforcing substrate with said resin.

3. The process according to claim 1, characterized by said differential pressure results from an introduction or release of gasses or liquids into or from one of said lower and upper chambers.

4. The process according to claim 1, characterized by said resin containing a catalyst.

5. The process according to claim 1, characterized by applying heat to said resin-fiber composite.

6. The process according to claim 1, characterized by the step of curing said impregnated resin-fiber composite.

7. The process according to claim 1, characterized by said vacuum chambers being vertically positioned such that gravity will expedite said impregnation of said fibrous reinforcing substrate.

8. The process according to claim 1, characterized by said resin being photocurable.

9. The process according to claim 1, characterized by said reinforcing substrate comprising material selected from the group consisting of carbon fibers, glass fibers and organic fibers.

10. The process according to claim 1, characterized by said reinforcing substrate comprising a material selected from the group consisting of rock, sand and mica.
